# EUROPÄISCHE PATENTSCHRIFT

(11) **EP 2 643 925 B1**
(45) Veröffentlichungstag und Bekanntmachung des Hinweises auf die Patenterteilung: **06.09.2017**
(21) Anmeldenummer: 11770744.8
(22) Anmeldetag: 13.10.2011
(51) Int. Cl.: H02N 1/00, G02B 26/08

(54) **DIGITALE ANSTEUERUNG FÜR EIN MIKRO-ELEKTROMECHANISCHES ELEMENT**
DIGITAL CONTROL FOR A MICRO-ELECTROMECHANICAL ELEMENT
COMMANDE NUMÉRIQUE POUR UN ÉLÉMENT MICROÉLECTROMÉCANIQUE

(30) Priorität: 23.11.2010 DE 102010061790
(43) Veröffentlichungstag der Anmeldung: 02.10.2013
(73) Patentinhaber: Robert Bosch GmbH, 70442 Stuttgart (DE)
(72) Erfinder: WENZLER, Axel, 78628 Rottweil (DE); AL DIBS, Mohamad, Iyad, 72793 Pfullingen (DE); KRAYL, Oliver, 70839 Gerlingen (DE)
(86) Internationale Anmeldenummer: PCT/EP2011/067854
(87) Internationale Veröffentlichungsnummer: WO 2012/069248

(56) Entgegenhaltungen:
- WO-A1-2010/007814
- US-B1- 7 428 353
- NORTHEMANN T ET AL: "Drive and sense interface for gyroscopes based on bandpass sigma-delta modulators", IEEE INTERNATIONAL SYMPOSIUM ON CIRCUITS AND SYSTEMS. ISCAS 2010 - 30 MAY-2 JUNE 2010 - PARIS, FRANCE, IEEE, US, 30. Mai 2010 (2010-05-30), Seiten 3264-3267, XP031725139, ISBN: 978-1-4244-5308-5
- NORTHEMANN T ET AL: "A digital interface for gyroscopes controlling the primary and secondary mode using bandpass sigma-delta modulation", SENSORS AND ACTUATORS A, ELSEVIER SEQUOIA S.A., LAUSANNE, CH, Bd. 162, Nr. 2, 1. August 2010 (2010-08-01), Seiten 388-393, XP027320468, ISSN: 0924-4247 [gefunden am 2010-06-18]
- RICART J ET AL: "Control of MEMS Vibration Modes With Pulsed Digital Oscillatorsâ Part II: Simulation and Experimental Results", IEEE TRANSACTIONS ON CIRCUITS AND SYSTEMS I: REGULAR PAPERS, IEEE, US, Bd. 57, Nr. 8, 1. August 2010 (2010-08-01) , Seiten 1879-1890, XP011333773, ISSN: 1549-8328, DOI: 10.1109/TCSI.2009.2038543
- BOSER B E ET AL: "Design of integrated MEMs", 19960101, 1. Januar 1996 (1996-01-01), Seiten 207-232, XP010164712,

## Beschreibung

Die vorliegende Erfindung betrifft eine Steuerschaltung für eine digitale Ansteuerung eines mikro-elektromechanischen Elements und ein Verfahren zum Ansteuern eines mikro-elektromechanischen Elements.

### Stand der Technik

Mikro-elektromechanische Systeme (MEMS) werden heute in der Mikrosystemtechnik als Umsetzer von Ansteuersignalen in mechanische Aktionen verwendet. Dabei spielen Aktoren eine große Rolle, insbesondere mikro-elektromechanische Aktoren. Ein Anwendungsbeispiel betrifft die Verwendung von Mikrospiegelaktoren (SLM, spatial light modulators), mit deren Hilfe über ein Mikrospiegelelement bzw. ein Array von Mikrospiegeln durch Drehung, Kippung und Verschiebung Lichtstrahlen wie beispielsweise Laserstrahlen gezielt abgelenkt werden können.

Aktoren benötigen dabei spezielle und präzise Ansteuersignale, um einen störungsfreien, reproduzierbaren und schnellen Betrieb der mechanischen Elemente des Aktors gewährleisten zu können. Dies stellt an die zum Betrieb eines Aktors verwendeten Ansteuerschaltungen hohe Ansprüche, insbesondere auch deswegen, da im Rahmen der Miniaturisierung mikro-elektromechanischer Bauelemente der Platzbedarf solcher Ansteuerungen gering bleiben muss, um die Kosten für die Fertigung gering zu halten.

Mikro-elektromechanische Elemente können resonant oder quasi-statisch betrieben werden. Eine resonante Betriebsweise erfordert das Betreiben des mikro-elektromechanischen Elements auf einer oder mehrerer der Moden des mikro-elektromechanischen Elements. Im quasi-statischen Betrieb hingegen wird das mikro-elektromechanische Element in Frequenzbereichen außerhalb der resonanten Moden betrieben. Dabei ist es wichtig, dass bei der Ansteuerung möglichst keine Frequenzanteile des Ansteuersignals auf den Moden liegen, da das mikro-elektromechanische Element dann möglicherweise temporär unstabil angesteuert wird.

Ansteuerungsverfahren von mikro-elektromechanischen Elementen verwenden in der Regel Linear-Treiber oder Digital-Treiber. Lineartreiber können in eine anwendungsspezifische integrierte Schaltung (ASIC) eingebettet sein. Sie benötigen dabei aber eine vergleichsweise große Fläche für die Integration der konstituierenden Komponenten wie beispielsweise Operationsverstärker, Regler, Spannungs- und Stromreferenzschaltungen, Stabilisierungskapazitäten und ähnliche Bauteile. Zudem wird ein Digital-Analog-Wandler benötigt, was zu einem komplexen und aufwändigen Gesamtsystem mit vergleichsweise hohem Energiebedarf führen kann.

Die Druckschrift DE 10 2004 016 196 A1 offenbart ein Verfahren zur Ansteuerung eines elektromechanischen Systems, wobei eine Lineartreiberschaltung und eine Digital-Analog-Wandler verwendet wird.

Aus den Schriften von Northemann et al. "Drive and sense interface for gyroscopees based on bandpass sigma-delta modulators", IEEE International Symposium on Circuits and Systems, ISCAS 2010, IEEE, US, Seiten 3264-3267, XP031725139 sowie "A digital interface for gyroscopes controlling the primary and secondary mode using bandpass sigma-delta modulation", SENSORS AND ACTUATORS A, Bd. 162, Nr. 2, Seiten 388-393, XP027320468 sind Ansteuervorrichtungen von Gyroscopen bekannt. Bei diesen Ansteuervorrichtungen wird das Ausgangssignal des Gyroscopen über einen Delta-Sigma-Modulator mittels eines Oversamplings überwacht und zur Erzeugung einer Ansteuerregelung der Resonanzschwingung des Gyroskopen verwendet. Als Abtastfrequenz des Oversamplings dient dabei ein Vielfaches von der Resonanzfrequenz.

Digital-Treiber sind üblicherweise einfach im Aufbau, platzsparend und resistent gegenüber Störungen. Sie eignen sich gut für den Einsatz im resonanten Betrieb. Für den Einsatz im quasi-statischen Betrieb sind hingegen Störanteile zu berücksichtigen, die unter Umständen Frequenzen im Bereich der resonanten Störmoden aufweisen können. Es besteht daher ein Bedarf nach einer Ansteuerung eines mikro-elektromechanischen Elements mit einem Digital-Treiber, welches vorstehend genannte Aspekte berücksichtigt.

### Offenbarung der Erfindung

Die der vorliegenden Erfindung zugrunde liegende Idee ist es, ein Verfahren und eine Vorrichtung zum Ansteuern eines mikro-elektromechanisches Element im quasi-statischen Betrieb zu schaffen, mit welchem das mikro-elektromechanische Element möglichst störungsfrei angesteuert werden kann, und welches einen geringen Implementierungsaufwand benötigt.

Eine erfindungsgemäße Steuerschaltung für ein mikro-elektromechanisches Element nach Anspruch 5 weist einen Signalformgenerator, einen Modulator und eine digitale Treibereinrichtung auf. Der Signalformgenerator ist dazu ausgelegt ist, ein digitales Ansteuersignal für das mikro-elektromechanische Element zu generieren. Der Modulator ist dazu ausgelegt ist, das digitale Ansteuersignal überabzutasten, einer Rauschformung zu unterwerfen und ein überabgetastetes und rauschgeformtes digitales Ansteuersignal auszugeben. Die digitale Treibereinrichtung ist dazu ausgelegt ist, das mikro-elektromechanische Element mit dem überabgetasteten und rauschgeformten digitalen Ansteuersignal zu treiben. Diese Ansteuerung bietet den Vorteil, dass konventionelle Digital-Endstufen eingesetzt werden können, die in einfacher und platzsparender Weise in einer integrierten Schaltung untergebracht werden können.

Vorzugsweise ist der Modulator ein Delta-Sigma-Modulator und das mikro-elektromechanische Element ein kapazitiver Aktor, insbesondere ein Mikrospiegelaktor. Dadurch kann eine hohe Auslenkgenauigkeit des Aktors im quasi-statischen Betrieb bei gleichzeitig geringen Anforderungen an die Steuertreiber erreicht werden.

Vorteilhafterweise können die Nullstellen des Delta-Sigma-Modulators auf Frequenzen resonanter Moden des mikro-elektromechanischen Elements gesetzt sein, wodurch eine gezielte Unterdrückung von Rauschkomponenten bei Frequenzen resonanter Moden des mikro-elektromechanischen Elements möglich wird.

Ein erfindungsgemäßes Verfahren zum Ansteuern eines mikro-elektromechanischen Elements nach Anspruch 1 umfasst die Schritte:
Bereitstellen eines digitalen Ansteuersignals mit einer Signalfrequenz, die unterhalb einer Grenzfrequenz (ω_{g}) des mikro-elektromechanischen Elements (30) liegt;
Überabtasten des digitalen Ansteuersignals mit einer Abtastfrequenz, die größer als das doppelte der Grenzfrequenz (ω_{g}) ist;
Rauschformen des überabgetasteten digitalen Ansteuersignals durch ein Verschieben eines bei dem Überabtasten entstehenden Rauschens in einen Frequenzbereich (23b) oberhalb der Grenzfrequenz (ω_{g}); und
Treiben des mikro-elektromechanischen Elements (30) mit dem überabgetasteten digitalen Ansteuersignal.

Mit diesem Verfahren ist es möglich, ein gewünschtes Signalband rauschfrei zu halten, und dabei insbesondere die Anregung resonanter Moden des mikro-elektromechanischen Elements in einem quasi-statischen Betrieb effektiv zu verhindern.

Weitere Ausführungsformen und Weiterbildungen sind in den abhängigen Patentansprüchen angegeben.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die vorliegende Erfindung wird nachfolgend anhand der in den schematischen Figuren der Zeichnung angegebenen Ausführungsbeispiele näher erläutert. Es zeigen dabei:
- Fig. 1: ein Ersatzschaltbild eines mikro-elektromechanischen Aktors;
- Fig. 2: ein Bode-Diagramm des Frequenzgangs eines mikro-elektromechanischen Aktors;
- Fig. 3: eine Steuerschaltung gemäß einer Ausführungsform der Erfindung;
- Fig. 4: eine Steuerschaltung gemäß einer weiteren Ausführungsform der Erfindung; und
- Fig. 5: ein Verfahren zum Ansteuern eines mikro-elektromechanischen Elements gemäß einer weiteren Ausführungsform der Erfindung.

In den Figuren der Zeichnung sind gleiche und funktionsgleiche Elemente, Merkmale und Komponenten - sofern nichts Anderes ausgeführt ist - jeweils mit denselben Bezugszeichen versehen. Es versteht sich, dass Komponenten und Elemente in den Zeichnungen aus Gründen der Übersichtlichkeit und Verständlichkeit nicht notwendigerweise maßstabsgetreu zueinander wiedergegeben sind.

Mikro-elektromechanische Elemente im Sinne dieser Erfindung können insbesondere mikro-elektromechanische Aktoren umfassen. Aktoren werden über ein Steuersignal angesteuert, um Eingangssignale in mechanische Aktionen, insbesondere Drehung, Kippungen und lineare Versätze angeschlossener mechanischer Bauteile zu bewirken. Ein Beispiel für einen Aktor ist ein Mikrospiegelaktor, mit dem ein Mikrospiegel entlang einer oder mehrerer Dreh-, Kipp- oder Versatzachsen rotiert oder bewegt werden kann.

Bei der linearen Ansteuerung mikro-elektromechanischer Bauteile wird versucht, keine resonanten Moden des mikro-elektromechanischen Elements anzuregen, das heißt, einen quasi-statischen Betrieb zu ermöglichen.

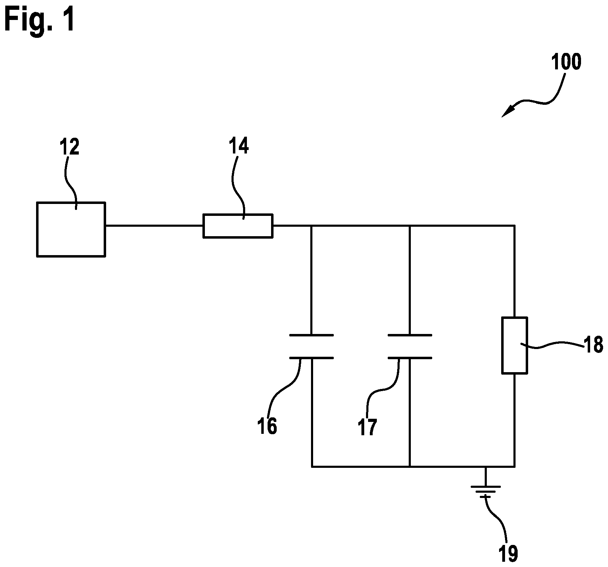

In Fig. 1 ist das Ersatzschaltbild eines mikro-elektromechanischen Aktors 100 gezeigt. Der mikro-elektromechanische Aktor 100 umfasst dabei einen ersten Eingangswiderstand 14, der in Reihe mit einer Parallelschaltung aus einer ersten Kapazität 16, einer zweiten Kapazität 17 und einem zweiten Widerstand 18 geschaltet ist. An einem Eingang 12 des mikro-elektromechanischen Aktors 100 liegt ein Steuersignal an, welches zunächst durch den Eingangswiderstand 14 geleitet wird, der in der Regel niederohmig ist und alle Leitungswiderstände R_{Leitung} des Aktors 100 widerspiegelt. Die Kapazität C des Aktors 100 kann in eine erste Kapazität 16 und eine zweite Kapazität 17 aufgeteilt werden. Die erste Kapazität 16 ist eine Nutzkapazität C_{N} des mikro-elektromechanischen Aktors 100 und die zweite Kapazität 17 ist eine parasitäre Kapazität C_{P} des mikro-elektromechanischen Aktors 100. In der Regel ist die Nutzkapazität C_{N} des mikro-elektromechanischen Aktors 100 gegenüber der parasitären Kapazität C_{P} des mikro-elektromechanischen Aktors 100 klein. Sie ist in normalerweise in Abhängigkeit des mechanischen Zustands des Aktors 100 dynamisch.

Das Ersatzschaltbild in Fig. 1 des mikro-elektromechanischen Aktors 100 ist charakteristisch für ein träges Feder-Masse-System und stellt in erster Näherung einen Tiefpass zweiter Ordnung dar. Ein mikro-elektromechanischer Aktor im Sinne der Erfindung weist daher eine Tiefpass-Charakteristik auf.

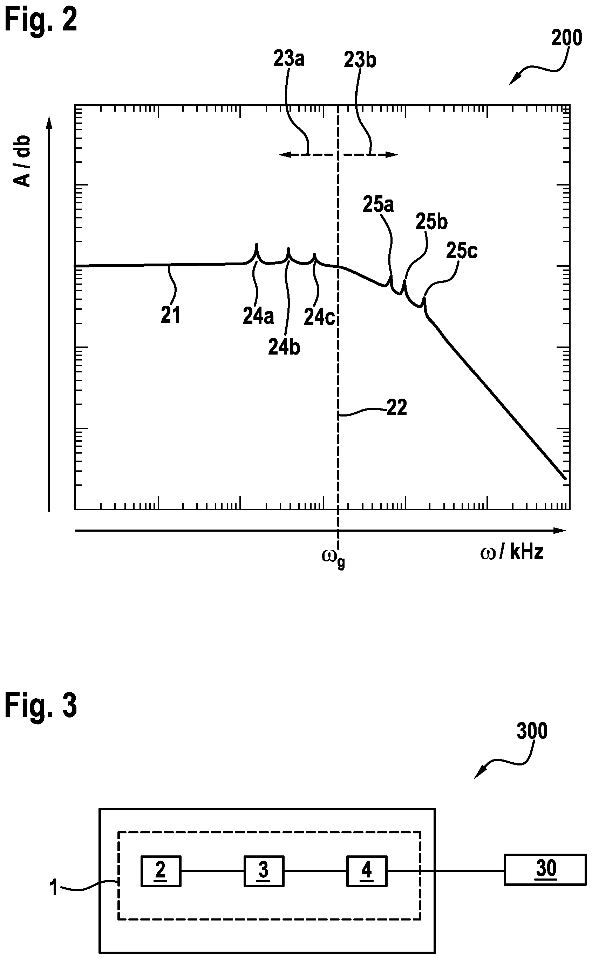

Fig. 2 zeigt den Frequenzgang 200 eines mikro-elektromechanischen Aktors in dem Amplitudenteil eines Bode-Diagramms. Dabei ist auf der Abszisse die Frequenz ω in kHz gegen die Amplitude in dB auf der Ordinate aufgetragen. Der Frequenzbereich eines mikro-elektromechanischen Aktors kann in zwei Bereiche mit je zwei Bandbreiten aufgeteilt werden.

Unterhalb einer Grenzfrequenz ω_{g} 22 liegt der Bereich 23a, angedeutet durch den nach links weisenden gestrichelten Pfeil, der einen Nutzbereich des mikro-elektromechanischen Aktors darstellt. In diesem Nutzbereich kann der mikro-elektromechanische Aktor in einem Frequenzbereich 21 des Frequenzganges quasi-statisch angesteuert werden. Der Frequenzbereich 21 liegt dabei insbesondere nicht in Frequenzbereichen, die resonante Moden des mikro-elektromechanischen Aktors aufweisen. Beispielhaft sind in Fig. 2 drei resonante Moden 24a, 24b, 24c mit einer Amplitudenüberhöhung im Frequenzgang dargestellt. Je nach Aktor können dabei jedoch auch mehr oder weniger resonante Moden auftreten. Die resonanten Moden können bei verschiedenen Frequenzen innerhalb des Nutzbereichs 23a auftreten. Die resonanten Moden 24a, 24b, 24c sind sehr leicht anregbar und können bei einer Anregung durch die Amplitudenverstärkung zu einer unstabilen Ansteuerung des mikro-elektromechanischen Aktors führen. Es ist daher erwünscht, dass in einem quasi-statischen Betrieb Ansteuersignale für einen mikro-elektromechanischen Aktor zu keinem Zeitpunkt Frequenzanteile aufweisen, die den Frequenzen der resonanten Moden 24a, 24b, 24c entsprechen.

Oberhalb der Grenzfrequenz ω_{g} 22 liegt der Bereich 23b, angedeutet durch den nach rechts weisenden gestrichelten Pfeil, der einen dämpfungsdominierten Bereich des mikro-elektromechanischen Aktors darstellt. In diesem Bereich dominiert die Trägheit des als Feder-Masse-System nach Fig. 1 modellierten mikro-elektromechanischen Aktors. Zwar liegen in diesem Bereich ebenfalls resonante Moden 25a, 25b, 25c, jedoch sind diese Moden aufgrund der Systemträgheit des mikro-elektromechanischen Aktors stark gedämpft und können somit nicht leicht angeregt werden.

Fig. 3 zeigt eine Steuerschaltung 300 für ein digitales Ansteuern eines mikro-elektromechanischen Elements 30 gemäß einer Ausführungsform der vorliegenden Erfindung. Die Steuerschaltung 300 umfasst dabei einen Signalformgenerator 2, einen Modulator 3 und eine digitale Treibereinrichtung 4. Der Signalformgenerator 2, der Modulator 3 und die digitale Treibereinrichtung können dabei in einer integrierten Schaltung 1 angeordnet sein, wie beispielsweise einem ASIC-Chip oder dergleichen. Der Signalformgenerator 2 ist mit einem Eingang des Modulators 3 gekoppelt, dessen Ausgang wiederum mit einem Eingang der digitalen Treibereinrichtung 4 gekoppelt ist. Der Ausgang der digitalen Treibereinrichtung 4 ist mit einem Steuereingang des mikro-elektromechanischen Elements 30 gekoppelt.

Der Signalformgenerator 2 ist dazu ausgelegt, ein digitales Ansteuersignal für das mikro-elektromechanische Element 30 zu erzeugen. Das digitale Ansteuersignal weist dabei eine oder mehrere Nutzsignalfrequenzen, die in einem Nutzbereich des mikro-elektromechanischen Elements 30 liegen, beispielsweise in dem in Fig. 2 gezeigten Bereiche 23a, insbesondere bei Frequenzen in dem mit dem Bezugszeichen 21 gekennzeichneten Bereich. Diese Nutzsignalfrequenzen können beispielsweise in einem Bereichen zwischen 10 Hz und 1 kHz, insbesondere im Bereich zwischen einigen 10 Hz und einigen 100 Hz liegen. Die Nutzsignalfrequenzen sind derart ausgelegt, dass sie nicht mit Frequenzen resonanter Moden des mikro-elektromechanischen Elements 30 zusammenfallen, beispielsweise nicht mit resonanten Moden 24a, 24b, 24c, wie in Fig. 2 gezeigt.

Das digitale Ansteuersignal kann dabei beispielsweise auf der integrierten Schaltung 1 erzeugt werden. Es kann jedoch auch vorgesehen, das digitale Ansteuersignal aus einem Speicher auf der integrierten Schaltung auszulesen, wobei der Speicher eine Vielzahl von vordefinierten Ansteuersignalen enthält und jeweils eines der vordefinierten Ansteuersignale aus dem Speicher geladen wird, um das mikro-elektromechanischen Element 30 anzusteuern.

Der Modulator 3 ist dazu ausgelegt, das digitale Ansteuersignal überabzutasten, einer Rauschformung zu unterwerfen und ein überabgetastetes und rauschgeformtes digitales Ansteuersignal an die digitale Treibereinrichtung 4 auszugeben. Insbesondere kann der Modulator 3 ein Delta-Sigma-Modulator sein.

Ein Delta-Sigma-Modulator besitzt zwei Eigenschaften, die vorteilhafterweise zur Realisierung der gewünschten Signalformung des digitalen Ansteuersignals eingesetzt werden können:

Zum einen arbeitet ein Delta-Sigma-Modulator mit einer hohen Überabtastrate. Die hohe Überabtastrate kann dabei eine Abtastfrequenz aufweisen, die mindestens doppelt so groß wie die Grenzfrequenz ω_{g} des mikro-elektromechanischen Elements 30 ist. Ein bei der Quantisierung des digitalen Ansteuersignals durch den Modulator 3 entstehendes Quantisierungsrauschen wird gleichmäßig über einen Frequenzbereich verteilt, der von der Frequenz 0 bis zur Hälfte der Abtastfrequenz reicht. Dabei bleibt die gesamte Rauschenergie, die sich über den Frequenzbereich verteilt, konstant. Je höher also die Abtastfrequenz ist, desto größer ist der Frequenzbereich, in dem sich das Quantisierungsrauschen verteilt, und desto höher ist der Signal-zu-Rausch-Abstand für jede einzelne Frequenz innerhalb dieses Frequenzbereichs.

Der Bereich 23a in Fig. 2 ist der Nutzbereich des mikro-elektromechanischen Elements 30, der für das Quantisierungsrauschen eine Rolle spielt. Mit steigender Abtastfrequenz des Modulators 3 sinkt damit der relative Anteil des Quantisierungsrauschens innerhalb des Bereichs 23a im Vergleich zum gesamten Frequenzbereich, über den sich das Quantisierungsrauschen verteilt. Deshalb kann über eine hohe Abtastfrequenz bei der Überabtastung des digitalen Ansteuersignals der Signal-zu-Rausch-Abstand im relevanten Nutzbereich des mikro-elektromechanischen Elements 30 hoch gehalten werden. Insbesondere im Bereich der resonanten Moden 24a, 24b, 24c ist damit der Signal-zu-Rausch-Abstand ebenfalls hoch, das heißt, bei einer Ansteuerung des mikro-elektromechanischen Elements 30 im quasi-statischen Betrieb ist der Anteil der Stör- und Rauschsignale bei den Frequenzen der resonanten Moden gering und eine Ansteuerung des mikro-elektromechanischen Elements 30 ist stabil. Bei einer Verdopplung der Abtastfrequenz des Modulators 3 führt dabei zu einem um etwa 3 dB verminderten Rauschpegel im Nutzbereich des mikro-elektromechanischen Elements 30.

Zum zweiten wird mit einem Delta-Sigma-Modulator eine Rauschformung durchgeführt. Rauschformung bezeichnet ein Verfahren, in dem das Quantisierungsrauschen eines digitalen Signals in bestimmten Frequenzbereichen stärker konzentriert wird und es dadurch zu einer Verschiebung der Rauschenergie im Frequenzspektrum kommt. Mit einem Delta-Sigma-Modulator können daher Rauschsignale des Quantisierungsrauschens in einen Frequenzbereich 23b oberhalb der Grenzfrequenz ω_{g} verschoben werden. In diesem Bereich 23b dominiert die Trägheit des mikro-elektromechanischen Elements 30, so dass gemäß der in Fig. 2 gezeigten Übertragungsfunktion Rauschsignale in diesem Frequenzbereich durch die inhärenten Tiefpass-Eigenschaften des mikro-elektromechanischen Elements 30 gefiltert werden.

Das Maß der Rauschformung ist beispielsweise von der Überabtastungsfrequenz und der Ordnung des Delta-Sigma-Modulators abhängig. Je nach Wahl der Modulatorparameter kann damit die Verschiebung des Quantisierungsrauschens in den zweiten Bereich 23b erreicht werden.

Ein Delta-Sigma-Modulator weist in seinem Vorwärtspfad je nach Ordnung mindestens einen Integrator auf, welcher eine Signaltransferfunktion aufweist. Diese Signaltransferfunktion besitzt eine oder mehrere Nullstellen. Über die Wahl der Signaltransferfunktion des Integrators und der entsprechenden Wahl der Nullstellen kann die Rauschsignaltransferfunktion des Delta-Sigma-Modulators an diesen Nullstellen Null gesetzt werden. Damit wird bei den Frequenzen, die den Nullstellen entsprechen, ein Quantisierungsrauschen im Ausgabesignal des Delta-Sigma-Modulators unterdrückt.

Die Erfindung macht sich diesen Zusammenhang in vorteilhafter Weise zunutze, indem ein Integrator des Delta-Sigma-Modulators eine Nullstelle seiner Transferfunktion auf der Frequenz einer resonanten Mode des mikro-elektromechanischen Elements 30 aufweisen kann. Damit wird ein Rauschsignal mit einem Frequenzanteil bei einer Frequenz der entsprechenden resonanten Mode des mikro-elektromechanischen Elements 30 effektiv unterdrückt und eine Ansteuerung des mikro-elektromechanischen Elements 30 ist damit im quasi-statischen Betrieb stabil.

Das Ausgabesignal des Modulators 3 wird in eine Treibereinrichtung eingespeist und von dieser zum Treiben des mikro-elektromechanischen Elements 30 genutzt. Dabei weist das Ansteuersignal zum Treiben des mikro-elektromechanischen Elements 30 in vorteilhafter Weise keine oder zumindest stark verringerte Frequenzanteile bei Frequenzen resonanter Moden 24a, 24b, 24c des Nutzbereichs 23a des mikro-elektromechanischen Elements 30 auf, wodurch eine stabile Ansteuerung im quasi-statischen Betrieb gewährleistet werden kann.

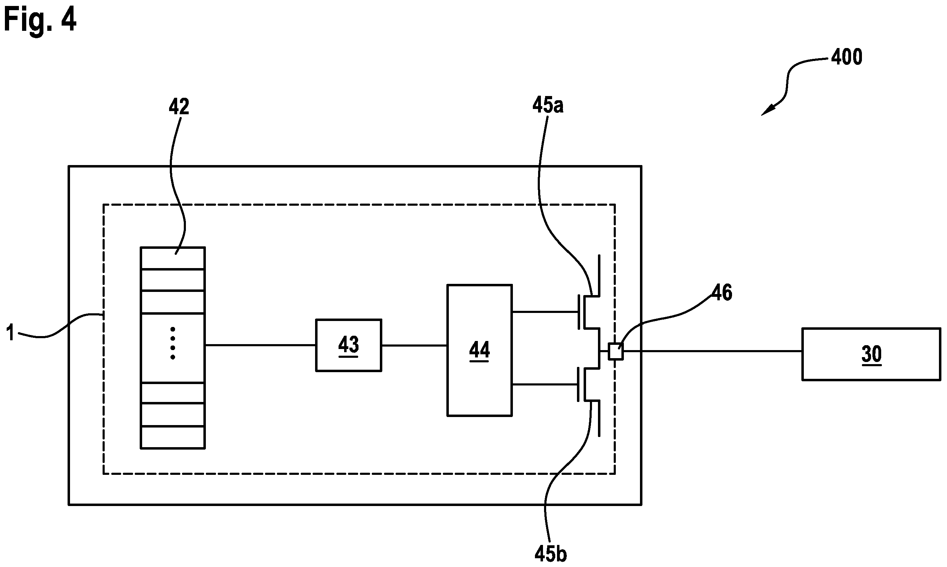

Fig. 4 zeigt eine Steuerschaltung 400 gemäß einer weiteren Ausführungsform der Erfindung. die Steuerschaltung 400 kann dabei insbesondere eine beispielhafte Ausführungsform der Steuerschaltung 300 sein. Die Steuerschaltung 400 umfasst eine Nachschlagetabelle 42 mit N Bit, aus der Ansteuersignalformen für die digitale Ansteuerung eines mikro-elektromechanischen Elements 30 bereitgestellt werden können. Weiterhin umfasst die Steuerschaltung 400 einen Delta-Sigma-Modulator 43, der ein digitales Ansteuersignal von der Nachschlagetabelle 42 empfängt und ein überabgetastetes und rauschgeformtes digitales Ansteuersignal ausgibt. Das überabgetastete und rauschgeformte digitale Ansteuersignal wird von einem Gate-Treiber 44 empfangen, der entsprechend des Ansteuersignals zwei Transistoren 45a und 45b, insbesondere MOSFETs, ansteuert. Über einen Anschluss 46 auf einem ASIC-Chip, auf dem die Nachschlagetabelle 42, der Delta-Sigma-Modulator 43, der Gate-Treiber 44 sowie die Transistoren 45a und 45b angeordnet sein können, wird ein Treibersignal in das mikro-elektromechanische Element 30 eingespeist.

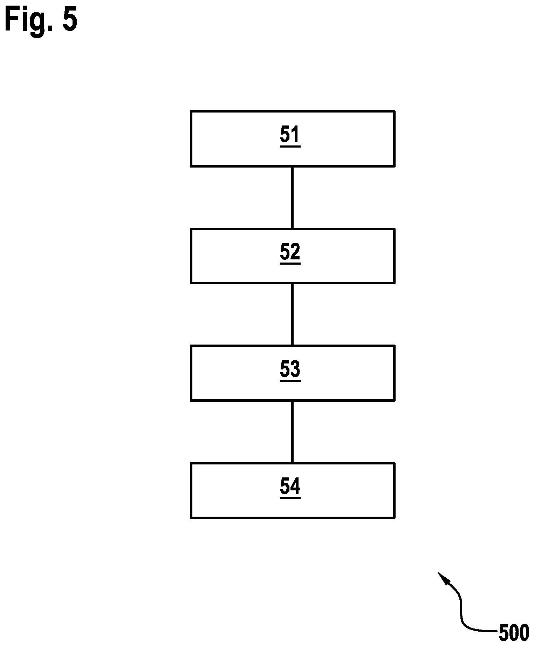

In Fig. 5 ist ein Verfahren 500 zum Ansteuern eines mikro-elektromechanischen Elements schematisch dargestellt

In einem ersten Schritt 51 des Verfahrens 500 wird ein digitales Ansteuersignal mit einer Signalfrequenz, die unterhalb einer Grenzfrequenz ω_{g} des mikro-elektromechanischen Elements 30 liegt bereitgestellt..

In einem zweiten Schritt 52 wird das digitale Ansteuersignal mit einer Abtastfrequenz, die größer als das doppelte der Grenzfrequenz ω_{g} ist, überabgetastet. Die Überabtastung kann dabei mit einem Delta-Sigma-Modulator wie oben im Zusammenhang mit Fig. 3 geschildert erfolgen.

In einem dritten Schritt 53 wird das überabgetasteten digitalen Ansteuersignals durch ein Verschieben eines bei dem Überabtasten entstehenden Rauschens in einen Frequenzbereich oberhalb der Grenzfrequenz ω_{g} rauschgeformt. Das Rauschformen kann dabei mit einem Delta-Sigma-Modulator wie oben im Zusammenhang mit Fig. 3 geschildert erfolgen.

In einem vierten Schritt 54 wird das mikro-elektromechanische Element 30 mit dem überabgetasteten digitalen Ansteuersignal getrieben. Insbesondere kann das Verfahren 500 zum Treiben eines kapazitiven Aktors, insbesondere eines Mikrospiegelaktors, im quasi-statischen Betrieb eingesetzt werden.

## Patentansprüche

1. Verfahren (500) zum Ansteuern eines mikro-elektromechanischen Elements (30), mit den Schritten:
Bereitstellen eines digitalen Ansteuersignals mit einer Signalfrequenz, die unterhalb einer Grenzfrequenz (ω_{g}) des mikro-elektromechanischen Elements (30) liegt;
Überabtasten des digitalen Ansteuersignals mit einer Abtastfrequenz, die größer als die doppelte der Grenzfrequenz (ω_{g}) ist;
Rauschformen des überabgetasteten digitalen Ansteuersignals durch ein Verschieben eines bei dem Überabtasten entstehenden Rauschens in einen Frequenzbereich (23b) oberhalb der Grenzfrequenz (ω_{g}); und
Treiben des mikro-elektromechanischen Elements (30) mit dem überabgetasteten digitalen Ansteuersignal.

2. Verfahren (500) nach Anspruch 1, wobei
die Schritte des Überabtastens und des Rauschformens mit einem Delta-Sigma-Modulator durchgeführt werden.

3. Verfahren (500) nach Anspruch 2, wobei
eine Nullstelle der Transferfunktion eines Integrators des Delta-Sigma-Modulators auf
eine Frequenz einer resonanten Mode des mikro-elektromechanischen Elements (30) in einem Frequenzbereich (23a) unterhalb der Grenzfrequenz (ω_{g}) gesetzt wird.

4. Vorrichtung mit einer Steuerschaltung (300) und einem mikro-elektromechanischen Element (30), wobei ein Ausgang der Steuerschaltung (300) mit einem Steuereingang des mikro-elektromechanischen Elements (30) gekoppelt ist und die Steuerschaltung (300) mittels eines Verfahrens nach einem der Ansprüche 1 bis 3 das mikro-elektromechanische Element (30) ansteuert, wobei die Steuerschaltung (300) aufweist:
• einen Signalformgenerator (2), der dazu ausgelegt ist, ein digitales Ansteuersignal für das mikro-elektromechanische Element (30) zu generieren, welches unterhalb der Grenzfrequenz () des mikro-elektromechanischen Elements (3) liegt;
• einen Modulator (3), der dazu ausgelegt ist, das digitale Ansteuersignal überabzutasten, einer Rauschformung zu unterwerfen und ein überabgetastetes und rauschgeformtes digitales Ansteuersignal auszugeben; und
• eine digitalen Treibereinrichtung (4), die dazu ausgelegt ist, das mikro-elektromechanische Element (30) über die Kopplung mit dem überabgetasteten und rauschgeformten digitalen Ansteuersignal im quasi-statischen Betrieb zu treiben.

5. Steuerschaltung (300) nach Anspruch 4, wobei
der Modulator (3) ein Delta-Sigma-Modulator ist.

6. Steuerschaltung (300) nach Anspruch 4 oder 5, wobei
das mikro-elektromechanische Element (30) ein kapazitiver Aktor, insbesondere ein Mikrospiegetaktor, ist.

7. Steuerschaltung (300) nach Anspruch 5, wobei
ein Integrator des Delta-Sigma-Modulators eine Nullstelle seiner Transferfunktion auf
der Frequenz einer resonanten Mode des mikro-elektromechanischen Elements (30) aufweist.

8. Steuerschaltung (300) nach Anspruch 5 oder 6, dass die Ansteuersignale zu keinem Zeitpunkt Frequenzanteile aufweisen, die den Frequenzen einer resonanten Mode des mikro-elektromechanischen Elements (30), insbesondere des Aktors, entspricht.

9. Steuerschaltung (300) nach einem der Anspruch 4 bis 8, dass die Ansteuersignale zu in einem Bereich von 10 Hz und 1 kHz liegen.

10. Steuerschaltung (300, 400) nach einem der Anspruch 4 bis 8, **dadurch gekennzeichnet, dass** ein Speicher mit einer Vielzahl von vordefinierten Ansteuersignalen vorgesehen ist und ein Ansteuersignal erzeugt wird, indem jeweils eines der vordefinierten Ansteuersignale aus dem Speicher geladen wird.

## Claims

1. Method (500) for driving a microelectromechanical element (30), comprising the following steps:
providing a digital drive signal having a signal frequency that is below a limiting frequency (ω_{g}) of the microelectromechanical element (30);
oversampling the digital drive signal with a sampling frequency that is greater than double the limiting frequency (ω_{g});
noise shaping of the oversampled digital drive signal by shifting noise that arises during the oversampling into a frequency range (23b) above the limiting frequency (ω_{g}); and
driving the microelectromechanical element (30) with the oversampled digital drive signal.

2. Method (500) according to Claim 1, wherein
the steps of oversampling and noise shaping are carried out by means of a delta-sigma modulator.

3. Method (500) according to Claim 2, wherein
a zero of the transfer function of an integrator of the delta-sigma modulator is set to a frequency of
a resonant mode of the microelectromechanical element (30) in a frequency range (23a) below the limiting frequency (ω_{g}).

4. Device comprising a control circuit (300) and a microelectromechanical element (30), wherein an output of the control circuit (300) is coupled to a control input of the microelectromechanical element (30) and the control circuit (300) drives the microelectromechanical element (30) by means of a method according to any of Claims 1 to 3, wherein the control circuit (300) comprises:
• a signal waveform generator (2) designed to generate a digital drive signal for the microelectromechanical element (30) that is below the limiting frequency () of the microelectromechanical element (3);
• a modulator (3) designed to oversample the digital drive signal, to subject the latter to noise shaping and to output an oversampled and noise-shaped digital drive signal; and
• a digital driver unit (4) designed to drive the microelectromechanical element (30) via the coupling with the oversampled and noise-shaped digital drive signal in quasi-static operation.

5. Control circuit (300) according to Claim 4, wherein
the modulator (3) is a delta-sigma modulator.

6. Control circuit (300) according to Claim 4 or 5,
wherein
the microelectromechanical element (30) is a capacitive actuator, in particular a micromirror actuator.

7. Control circuit (300) according to Claim 5, wherein an integrator of the delta-sigma modulator has a zero of its transfer function at the frequency of a resonant mode of the microelectromechanical element (30).

8. Control circuit (300) according to Claim 5 or 6, that at no point in time do the drive signals have frequency components corresponding to the frequencies of a resonant mode of the microelectromechanical element (30), in particular of the actuator.

9. Control circuit (300) according to any of Claims 4 to 8, that the drive signals are in a range of 10 Hz and 1 kHz.

10. Control circuit (300, 400) according to any of Claims 4 to 8, **characterized in that** a memory having a multiplicity of predefined drive signals is provided and a drive signal is generated by one of the predefined drive signals respectively being loaded from the memory.

## Revendications

1. Procédé (500) de commande d'un élément micro-électromécanique (30), comportant les étapes :
de la mise à disposition d'un signal de commande numérique, avec une fréquence de signal qui est inférieure à la fréquence limite (ω_{g}) de l'élément micro-électromécanique (30) ;
du suréchantillonnage du signal de commande numérique avec une fréquence d'échantillonnage qui est supérieure au double de la fréquence limite (ω_{g}) ;
de la mise en forme du bruit du signal de commande numérique suréchantillonné par un déplacement d'un bruit produit lors du suréchantillonnage dans une gamme de fréquence (23b) supérieure à la fréquence limite (ω_{g}) ; et
de l'excitation de l'élément micro-électromécanique (30) avec le signal de commande numérique suréchantillonné.

2. Procédé (500) selon la revendication 1, les étapes du suréchantillonnage et de la mise en forme du bruit étant réalisées avec un modulateur Delta-Sigma.

3. Procédé (500) selon la revendication 2,
un point zéro de la fonction de transfert d'un intégrateur du modulateur delta-sigma étant placé sur une fréquence d'un mode résonnant de l'élément micro-électromécanique (30) dans une gamme de fréquence (23a) inférieure à la fréquence limite (ω_{g}).

4. Dispositif avec un circuit de commande (300) et un élément micro-électromécanique (30), une sortie du circuit de commande (300) étant accouplée avec une entrée de commande de l'élément micro-électromécanique (30) et le circuit de commande (300) commandant l'élément micro-électromécanique (30) au moyen d'un procédé selon l'une quelconque des revendications 1 à 3, le circuit de commande (300) comportant :
• un générateur de forme d'onde (2), qui est conçu pour générer un signal de commande numérique pour l'élément micro-électromécanique (30), lequel est inférieur à la fréquence limite (3) de l'élément micro-électromécanique (3) ;
• un modulateur (3), qui est conçu pour suréchantillonner le signal de commande numérique, le soumettre à une mise en forme du bruit et pour délivrer un signal de commande suréchantillonné, à bruit conformé ; et
• un dispositif pilote (4) numérique qui est conçu pour exciter l'élément micro-électromécanique (30), par l'intermédiaire de l'accouplement avec le signal de commande suréchantillonné et à bruit conformé dans un mode de fonctionnement quasi-statique.

5. Circuit de commande (300) selon la revendication 4, le modulateur (3) étant un modulateur Delta-Sigma.

6. Circuit de commande (300) selon la revendication 4 ou 5,
l'élément micro-électromécanique (30) étant un actionneur capacitif, notamment un actionneur à micro-miroirs.

7. Circuit de commande (300) selon la revendication 5,
un intégrateur du modulateur Delta-Sigma comportant un point zéro de sa fonction de transfert sur la fréquence d'un mode résonnant de l'élément micro-électromécanique (30).

8. Circuit de commande (300) selon la revendication 5 ou 6, que les signaux de commande ne comportent à aucun moment des parts de fréquence qui correspondent aux fréquences d'un mode résonnant de l'élément micro-électromécanique (30), notamment de l'actionneur.

9. Circuit de commande (300) selon l'une quelconque des revendications 4 à 8, que les signaux de commande se situent dans un ordre de 10 Hz et 1 kHz.

10. Circuit de commande (300, 400) selon l'une quelconque des revendications 4 à 8, **caractérisé en ce qu'**il est prévu une mémoire avec une pluralité de signaux de commande prédéfinis et qu'il est généré un signal de commande **en ce que** respectivement l'un des signaux de commande prédéfinis est chargé à partir de la mémoire.
